Europäisches Patentamt

European Patent Office

Office européen des brevets

(11) Publication number: **0 389 893**
**A2**

# EUROPEAN PATENT APPLICATION

(21) Application number: **90105037.7**

(51) Int. Cl.5: **C08F 218/08**

(22) Date of filing: **16.03.90**

(30) Priority: **23.03.89 US 327855**

(43) Date of publication of application:
**03.10.90 Bulletin 90/40**

(84) Designated Contracting States:
**BE DE GB IT**

(71) Applicant: **AIR PRODUCTS AND CHEMICALS, INC.**
**7201 Hamilton Boulevard**
**Allentown, PA 18195-1501(US)**

(72) Inventor: **Lenney, William Edward**
**1382 Deerfield Drive**
**Allentown, PA 18104(US)**

(74) Representative: **Dipl.-Ing. Schwabe, Dr. Dr.**
**Sandmair, Dr. Marx**
**Stuntzstrasse 16**
**D-8000 München 80(DE)**

(54) **High solids emulsions of vinyl acetate/ethylene copolymers containing a water soluble comonomer.**

(57) A method for preparing a high solids, low viscosity, stable, aqueous vinyl acetate/ethylene copolymer emulsion, the copolymer containing a water soluble comonomer. Vinyl acetate and ethylene monomers are added to an aqueous solution containing a stabilizing system consisting essentially of 2-4 wt% low molecular weight polyvinyl alcohol of 100 to 600 degree of polymerization and 1-4 wt% of a nonionic surfactant which is a $C_7$-$C_{18}$ alkyl phenoxy poly(ethyleneoxy) ethanol containing 30-40 ethylene oxide units. The relative amount of vinyl acetate and ethylene to water charged to the reaction vessel is such that a water-in-monomer emulsion is initially formed.

EP 0 389 893 A2

# HIGH SOLIDS EMULSIONS OF VINYL ACETATE/ETHYLENE COPOLYMERS CONTAINING A WATER SOLU-BLE COMONOMER

## TECHNICAL FIELD

The invention relates to vinyl acetate/ethylene copolymer emulsions and, more particularly, it relates to such copolymers containing a water soluble comonomer and prepared by emulsion polymerization in the presence of a polyvinyl alcohol stabilizing agent.

## BACKGROUND OF THE INVENTION

A vinyl acetate/ethylene/acrylic acid (VAE/AA) terpolymer emulsion currently being manufactured and sold in the adhesive market has seen its commercial success seriously hindered by poor viscosity stability and poor pH stability. In storage, the VAE/AA copolymer emulsion viscosity and pH drifted with time. Product stratification in unstirred containers was also the rule. The absence of storage stability alone led to the loss in customer confidence and sales.

Added to the stability issue, the VAE/AA copolymer emulsion was also deficient in three very important product performance areas: setting speed, creep rate resistance and thickening response. Although the adhesion to paper, metal foils and the like was generally regarded as good, the three performance deficiencies negatively influenced commercial utility.

To be a successful product in the marketplace, a VAE/AA copolymer emulsion must possess the following properties:

1. Rapid setting - relatively fast speeds of set are preferred in packaging applications.
2. Strong wet tack - packaging and laminating adhesive utility increases as wet tack increases.
3. Thickening response - adhesive economics and properties can be improved if the emulsion responds rapidly to additions of plasticizers and solvents.
4. Rheology - the emulsion should not thin excessively under shear.
5. Creep Resistance - a low rate is preferred.

## SUMMARY OF THE INVENTION

The present invention provides stable aqueous dispersions of vinyl acetate/ethylene/water soluble comonomer polymers of high solids, i.e., greater than 60 wt% solids, which are useful as high speed packaging adhesives and in foil and film lamination. If the water soluble comonomer is a latent crosslinking monomer, the copolymer emulsions are useful as binders for nonwoven products. The aqueous emulsion comprises a vinyl acetate/ethylene/water soluble comonomer polymer which is 60 to 93 wt% vinyl acetate, 5 to 34 wt% ethylene and 2 to 10 wt% water soluble comonomer and, in a preferred embodiment, 70 to 85 wt% vinyl acetate, 9 to 28 wt% ethylene and 2 to 6 wt% acrylic acid, preferably 2 to 4 wt%.

The copolymer is dispersed in an aqueous medium and is prepared by the emulsion copolymerization of the vinyl acetate, ethylene and water soluble comonomer in the presence of a stabilizing system consisting essentially of (1) a low molecular weight polyvinyl alcohol which is 75-99 + mole % hydrolyzed and has an average degree of polymerization ranging from 100 to 600 and (2) a nonionic surfactant which is a polyethoxylated material of about 30-40 ethylene oxide units. Furthermore, the amount of the water insoluble monomers vinyl acetate and ethylene relative to water is such as to provide a water-in-oil (monomer) emulsion during the initial stages of polymerization which subsequently phase inverts to an oil-in-water emulsion as the monomers are consumed by polymerization. The resulting copolymer emulsions will comprise about 60 to 70 wt% solids, preferably 60 to 65 wt% solids, with a viscosity of less than about 3000 cps, preferably less than about 1500 cps, at 60% solids, 60 rpm, 25°C and pH 5.

The use of a stabilizing system consisting essentially of a low molecular weight polyvinyl alcohol and the nonionic polyethoxylate surfactant provides for the phase inversion emulsion polymerization of vinyl acetate, ethylene and water soluble comonomer and results in improvements in both emulsion stabilities and adhesive performances. Storage stability is extended substantially. Also, the following important adhesive properties are upgraded:

1. Setting speed - copolymer emulsions according to the invention set up to three times more rapidly than the prior art emulsion.

2. Wet tack - the present copolymer emulsions have higher wet tack response.

3. Thickening response - a higher response over the prior art emulsion is obtained.

4. Rheology - the present emulsions do not thin excessively under shear and out perform the prior art emulsions in high speed roller applications.

5. Creep resistance - the present emulsions display up to five-fold increase in resistance to cold flow.

## DETAILED DESCRIPTION OF THE INVENTION

The copolymers according to the invention comprise 60-93 wt% vinyl acetate, 5-34 wt% ethylene and 2-10 wt% water soluble comonomer, especially acrylic acid, to provide a Tg ranging from about -15 to 25°C, preferably the copolymer contains 70-85 wt% vinyl acetate, 9-28 wt% ethylene and 2-6 wt% comonomer.

For purposes of this invention, a "water soluble" comonomer is an ethylenically unsaturated compound polymerizable with vinyl acetate and ethylene and soluble in water to the extent of at least 5g/100g $H_2O$ at 25°C. Such comonomers usually contain polar functional groups which impart an affinity toward water and are exemplified by $C_3$-$C_5$ alkenoic acids, such as (meth)acrylic acid, crotonic acid, isocrotonic acid, maleic acid, fumaric acid and itaconic acid; hydroxyethyl acrylate, (meth)acrylamide, acrylonitrile, N-methylol (meth)acrylamide and N-(meth)acrylamidoglycolic acid.

The vinyl acetate/ethylene copolymers may optionally include one or more additional ethylenically unsaturated copolymerizable monomers. Exemplary of such comonomers, which may be present at up to 10 wt% or more, are mono and diesters of $C_3$-$C_{10}$ alkenoic acids, such as acrylic acid, methacrylic acid, crotonic acid and isocrotonic acid, maleic acid, fumaric acid and itaconic acid with $C_1$-$C_{18}$ alkanols, such as methanol, ethanol, propanol, butanol, and 2-ethylhexanol; vinyl halides such as vinyl chloride; and nitrogen containing monolefinically unsaturated monomers, particularly lower alkanoic acid esters of N-methylol amides, lower alkyl ethers of N-methylol amides and allylcarbamates, such as lower alkyl ethers or lower alkanoic acid esters of N-methylol acrylamide, N-methylol methacrylamide and N-methylol allylcarbamate. If such additional ethylenically unsaturated comonomer is used, about 2-5 wt% is preferred.

Contemplated as the functional, or operative, equivalent of vinyl acetate in the copolymer emulsions are vinyl esters of $C_1$-$C_{18}$ alkanoic acids, such as vinyl formate, vinyl propionate, vinyl laurate and the like.

The stabilizing system for the polymerization reaction to prepare the copolymer emulsions of the invention consists essentialLy of 2-4 wt% of a low molecular weight polyvinyl alcohol and 1-4 wt% of a nonionic surfactant which is a polyethoxylate containing about 30-40 ethylene oxide units, the weight percent being based on vinyl acetate monomer. The low molecular weight polyvinyl alcohol which is used in the stabilizing system can be 75-99 + mole% hydrolyzed, preferably 85-90 and especially 87-89 mole% hydrolyzed when used in conjunction with a fully hydrolyzed polyvinyl alcohol, and has a degree of polymerization ranging from 100 to 600, preferably, 185-255. Another means of assessing the degree of polymerization of the polyvinyl alcohol is its viscosity as a 4 wt% aqueous solution at 20°C. Suitable polyvinyl alcohols would have a viscosity ranging from 2.4 to about 7. Such polyvinyl alcohols can be prepared by synthesis and sponification techniques well known to those skilled in the art of manufacturing polyvinyl alcohol. A preferred polyvinyl alcohol having a degree of polymerization of about 235 is marketed by Air Products and Chemicals, Inc. under the trademark AIRVOL® 203.

The amount of such polyvinyl alcohol stabilizing component used in the polymerization reaction is about 2-4 wt%, preferably 2.5 to 3.5 wt%, based on vinyl acetate monomer in the polymerization recipe. The polyvinyl alcohol is preferably added to the polymerization reaction medium all at once prior to initiation, but can be added incrementally during the course of the polymerization, provided a sufficient amount is present initially to provide inverse phase (water in organic monomer) emulsion stability.

In addition to the polyvinyl alcohol component, the stabilizer system according to the invention also contains a nonionic surfactant level of about 1-4 wt%, preferably 1.5-3.5 wt%, based on vinyl acetate monomer.

The nonionic surfactants contemplated by the invention include alkyl phenoxy poly(ethyleneoxy)-ethanols marketed by GAF under the trademark Igepal. These alkyl phenoxy poly(ethyleneoxy)ethanols can be represented by the general formula:

$RPhO-(CH_2CH_2O)_{n-1} - CH_2CH_2OH$

wherein R represents an alkyl radical and n represents the number of moles of ethylene oxide employed. Illustrative are alkyl phenoxy poly(ethyleneoxy)ethanols having alkyl groups containing from about 7-18 carbon atoms, inclusive, and having from about 30 to about 40 ethyleneoxy (EO) units, such as the octyl phenoxy poly(ethyleneoxy)ethanols, nonyl phenoxy poly(ethyleneoxy)ethanols and the dodecyl phenoxy poly(ethyleneoxy)ethanols.

Various free-radical forming sources can be used in carrying out the polymerization of the monomers, such as peroxide compounds. Combination type systems employing both reducing agents and oxidizing agents can also be used, i.e., a redox system. Suitable reducing agents, or activators, include bisulfites, sulfoxylates, or other compounds having reducing properties such as ascorbic acid, erythorbic acid and other reducing sugars. The oxidizing agents include hydrogen peroxide, organic peroxides, such as t-butyl hydroperoxide and the like, persulfates, such as ammonium or potassium sulfate, and the like. Specific redox systems which can be used include hydrogen peroxide and zinc formaldehyde sulfoxylate; hydrogen peroxide and erythorbic acid; hydrogen peroxide, ammonium persulfate or potassium persulfate with sodium meta bisulfite, sodium bisulfite, ferrous sulfate, zinc formaldehyde sulfoxylate or sodium formaldehyde sulfoxylate. Other free radical forming systems that are known in the art can also be used to polymerize the monomers.

The oxidizing agent is generally employed in an amount of 0.01-1%, preferably 0.05-0.5%, based upon the weight of the vinyl acetate introduced into the polymerization system. The reducing agent is ordinarily added in an aqueous solution in the necessary equivalent amount.

The copolymer emulsions of the invention can be prepared by adding the water insoluble organic monomers to the aqueous medium containing the stabilizing system in an amount that is at least sufficient to provide a water-in-monomer emulsion, and then polymerizing the monomers which results in a phase inversion to a polymer-in-water emulsion. The water soluble comonomer can be added all up-front, delayed into the reaction medium over the course of the reaction, or a combination thereof, depending upon the relative reactivity of the comonomer to that of vinyl acetate. The procedure for preparing the copolymers will be more fully described using a vinyl acetate/ethylene/acrylic acid embodiment as an example.

In general, suitable vinyl acetate/ethylene/acrylic acid copolymer emulsions can be prepared by the copolymerization of the monomers in the presence of the polyvinyl alcohol-nonionic surfactant stabilizing system in an aqueous medium under ethylene pressures, for example, up to about 100 atm, and in the presence of a redox system which is added incrementally, the aqueous system being maintained by a suitable buffering agent at a pH of about 2-6. The process first involves a homogenization in which sufficient vinyl acetate suspended in water is thoroughly agitated in the presence of ethylene under the working pressure to effect solution of the ethylene in the vinyl acetate and, concomitantly, a water-in-monomer emulsion while the reaction medium is gradually heated to polymerization temperature. The homogenization period is followed by a polymerization period during which the redox system is added incrementally.

The reaction temperature can be controlled by the rate of redox addition and by the rate of heat dissipation. Generally, it is advantageous to maintain a mean temperature of about 55°C during the polymerization of the monomers and to avoid temperatures much in excess of 80°C. While temperatures as low as 0°C can be used, economically the lower temperature limit is about 30°C.

The reaction time will depend upon such variables as the temperature, the free radical forming source and the desired extent of polymerization. It is generally desirable to continue with the reaction until less than 0.5% of the vinyl acetate remains unreacted.

In carrying out the polymerization, an amount of the vinyl acetate is initially charged to the aqueous medium in the polymerization vessel and saturated with ethylene. Most advantageously, at least about 50%, preferably about 75%, of the total vinyl acetate to be polymerized is initially charged, but at least that amount necessary to form a water-in-monomer emulsion, and the remainder of the vinyl acetate and the acrylic acid are added incrementally during the course of the polymerization. The charging of all vinyl acetate initially is also contemplated with no additional incremental supply. Regardless of the amount of the total vinyl acetate monomer that is initially charged to the reactor, it seems that at least about 55 wt parts vinyl acetate per 45 wt parts water is required for a water-in-monomer emulsion.

When reference is made to incremental addition, substantially uniform additions, both with respect to quantity and time, are contemplated. Such additions can be continuous or discontinuous and are also referred to as "delay" additions.

The quantity of ethylene entering into the copolymer is influenced by pressure, the agitation and viscosity of the polymerization medium. Thus, to increase the ethylene content of the copolymer, high pressures, greater agitation and a low viscosity are employed.

The process of forming the vinyl acetate/ethylene/acrylic acid copolymer emulsion generally comprises the preparation of an aqueous solution containing the stabilizing system and, optionally, the pH buffering system. This aqueous solution and the initial or total charge of the vinyl acetate are added to the polymerization vessel and ethylene pressure is applied to the desired value. The pressurized ethylene source can be shut off from the reactor so that the ethylene pressure decays as it is polymerized or it can be kept open to maintain the ethylene pressure throughout the reaction, i.e. make-up ethylene. As previously mentioned, the mixture is thoroughly agitated to dissolve ethylene primarily in the vinyl acetate and to a lesser extent in the water phase. Conveniently, the charge is brought to polymerization temperature during this agitation period. The polymerization is then initiated by introducing initial amounts of the oxidant, the reductant having been added with the initial charge. After polymerization has started, the oxidant and reductant are incrementally added as required to continue polymerization. The acrylic acid and other copolymerizable monomer and remaining vinyl acetate, if any, are added as separate or combined delays.

As mentioned, the reaction is generally continued until the residual vinyl acetate content is below about 0.5%. The completed reaction product is then allowed to cool to about room temperature while sealed from the atmosphere. The pH is then suitably adjusted to a value in the range of 4.5 to 5.5, to insure stability.

A preferred method for producing the high solids, low viscosity VAE/water soluble comonomer polymer emulsions, especially the VAE/AA copolymer emulsions, is a "cold initiation" process which comprises first forming an aqueous water-in-monomer emulsion of vinyl acetate and the stabilizing system in the reactor. The reactor is then pressurized with ethylene to an ethylene-equilibrium pressure of about 100-800 psig. The resulting reaction mixture is adjusted to a temperature from about 10-30°C. Polymerization is initiated by the addition of a free radical source at a rate such that the reaction mixture is brought to a temperature of 45-85°C, preferably 55-65°C, within a period of 1.5 hours or less, preferably 60 minutes. The delay additions are commenced when initiation is observed. The polymerization is continued at this higher temperature range through the phase inversion and until the vinyl acetate content is below about 0.5% wt%.

VAE/AA copolymer emulsions can be directly produced having a solids content of about 60-70% and a viscosity of less than about 3000 cps, preferably less than bout 1500 cps, at 60% solids, and at 60 rpm, 25°C and pH 5. It is not necessary to employ seed emulsion polymerization techniques to obtain the emulsions of the invention. Seed emulsion polymerization may be detrimental to the properties of the adhesive emulsion product.

By initiating the polymerization at a high organic (monomers) to water ratio, an inverse emulsion is formed. Here the monomers function as the continuous phase. As the polymerization proceeds, the monomer concentration decreases and an inversion takes place. The aqueous phase now becomes the continuous phase. The distribution of growing emulsion particles is determined by the inversion process which is regulated in part by the polyvinyl alcohol and nonionic surfactant concentrations and grades. It is believed that a broad particle size distribution is formed by this technique in the presence of the particular stabilizing system leading to an increase in polydispersity and relatively low viscosity at high solids. The resulting copolymer emulsion exhibits the physical and performance improvements previously mentioned, namely improved speed of set, wet tack, thickening response, rheology and creep resistance.

VAE emulsion copolymers containing latent crosslinking monomers such as N-methylol (meth)-acrylamide or N-(meth)acrylamidoglycolic acid as the water soluble comonomer are useful as binders for making nonwoven products, or fabrics, by a variety of methods known in the art which, in general, involve Impregnation of a loosely assembled mass of fibers with the binder emulsion, followed by a moderate heating to dry the mass. In the case of the present invention, this moderate heating also serves to cure the binder by forming a crosslinked interpolymer. Before the binder is applied, it may, of course, be mixed with a suitable catalyst for the crosslinking monomer. For example, an acid catalyst such as mineral acids, e.g., hydrogen chloride, or organic acids, e.g., oxalic acid or acid salts such as ammonium chloride are suitably used as known in the art. The amount of catalyst is generally from 0.5 to 2% of the total polymer.

The starting fiber layer or mass can be formed by any one of the conventional techniques for depositing or arranging fibers in a web or layer. These techniques include carding, garnetting, air-laying, wet laying, and the like. Individual webs or thin layers formed by one or more of these techniques can also be laminated to provide a thicker layer for conversion into a fabric. Typically, the fibers extend in a plurality of diverse directions in general alignment with the major plane of the fabric, overlapping, intersecting and supporting one another to form an open, porous structure.

When reference is made to "cellulose" fibers, those fibers containing predominantly $C_6H_{10}O_5$ groupings are meant. Thus, examples of the fibers to be used in the starting layer are the natural cellulose fibers such as wood pulp, cotton and hemp and the synthetic cellulose fibers such as rayon, and regenerated cellulose. Often the fiber starting layer contains at least 50% cellulose fibers, whether they be natural or synthetic, or a combination thereof. Often the fibers in the starting layer may comprise natural fibers such as wool, jute; artificial fibers such as cellulose acetate; synthetic fibers such as polyamides, nylon, polyesters, acrylics, polyolefins, i.e., polyethylene, polyvinyl chloride, polyurethane and the like, alone or in combination with one another.

The fiber starting layer is subjected to at least one of several types of bonding operations to anchor the individual fibers together to form a self-sustaining web. Some of the better known methods of bonding are overall impregnation or printing the web with intermittent or continuous straight or wavy lines or areas of binder extending generally transversely or diagonally across the web, and additionally, if desired, along the web.

The amount of copolymer binder, calculated on a dry basis, applied to the fibrous starting web, is that amount which is at least sufficient to bind the fibers together to form a self-sustaining web and suitably ranges from about 3 to about 100% or more by weight of the starting web, preferably from about 10 to 50 wt% of the starting web. The impregnated web is then dried and cured. Thus the nonwoven products are suitably dried by passing them through an air oven or the like and then through a curing oven. Typical conditions to achieve optimal crosslinking are sufficient time and temperature such as drying at 150-200° F (66-93° C) for four to six minutes, followed by curing at 300-310° F (149-154° C) for three to five minutes or more. However, other time-temperature relationships can be employed as is well known in the art, shorter times and higher temperatures or longer times at lower temperatures being used.

## EXAMPLE 1

The following is a general procedure for preparing the vinyl acetate/ethylene/acrylic acid copolymer emulsions of the invention.

The components of the initial reactor charge and the various delay feeds are as follows:

| INITIAL REACTOR CHARGE | |
|---|---|
| 1) Vinol 203[a]PVOH, 10% aq soln. | 351 g |
| 2) Vinol 107[b]PVOH, 10% aq soln. | 234 g |
| 3) Water (deionized) | 400 g |
| 4) Ferrous ammonium sulfate, 1% aq soln. | 4.8 ml |
| 5) Igepal CO-887[c] surfactant | 55.7 g |
| 6) Vinyl acetate | 1387.5 g |
| 7) Acetic acid | ~1.3 ml |
| 8) Ethylene - Quantity to equilibrate reactor to 550 psi at 25° C | |
| DELAY FEEDS | |
| 1) Hydrogen peroxide, 1.0% aq soln. | 238.1 ml |
| 2) Hydrogen peroxide, 7.0% aq soln. | 55.7 ml |
| 3) Zinc formaldehyde sulfoxylate, 10% aq soln. | 91.2 ml |
| 4) Vinyl acetate/acrylic acid | VAM 484.5 g AA 78 g |

[a] Polyvinyl alcohol - 87-89 mole % hydrolyzed 3-4 cps viscosity @ 4% of soln. at 20° C and Dp of 235.

[b] Polyvinyl alcohol - 98-99 mole % hydrolyzed, 5-7 cps viscosity @ aq soln. at 20° C and Dp of 400.

[c] Nonylphenoxy poly(ethyleneoxy)ethanol (EO = 30) marketed by GAF Corp. 70% aqueous solution of Igepal CO-880 surfactant.

The pH of combined polyvinyl alcohol solutions and the deionized water is adjusted to 4.5 with the acetic acid. Next the Igepal surfactant is fully dissolved in the pH adjusted polyvinyl alcohol solution to which the ferrous ammonium sulfate solution is then added.

A one gallon reactor is filled with the water and blown dry with nitrogen. The polyvinyl alcohol solution is then added. With the solution being agitated at 200 rpm the vinyl acetate monomer initial charge is added. The reactor is purged subsurface twice with nitrogen (30 psi) and then once with ethylene (30 psi) at 30° C. The agitator speed is increased to 900 rpm and the reactor is pressurized to 550 psi with ethylene (subsurface). The reactor temperature and the ethylene pressure are allowed to equilibrate at 30° C and 550

6

psi, respectively.

The reaction is initiated using the 1.0% aqueous hydrogen peroxide solution at a rate of 0.6 ml/min and the 10% zinc formaldehyde sulfoxylate solution at 0.5 ml/mm. After the reaction medium temperature increases 1°C (initiation), the vinyl acetate/acrylic acid monomers delay is started at 3.3 ml/min. Once the initial temperature rise starts to level off, the reaction temperature is ramped to 55°C in one hour by slowly increasing the rate of addition of the 1.0% hydrogen peroxide solution to achieve 20°C ΔT or approximately 1.6 ml/min addition rate at the initiation plus one hour mark. When the temperature reaches 55°C, the ethylene make-up pressure is then set to 400 psi, and the 1.0% hydrogen peroxide solution is automatically controlled to provide a set point 20°C ΔT (°T reaction-°T jacket). After 3 hours the agitation is increased to 1000 rpm, the vinyl acetate/acrylic acid monomers delay is stopped (~ 562.2 g added).

When the vinyl acetate free monomer level is less than about 3%, the 1.0% hydrogen peroxide delay is stopped and the 7% hydrogen peroxide delay is begun increasing from 0.5 to 1 ml/min over a period of 5-10 minutes. The ethylene make-up is also stopped at this time. When the 7% hydrogen peroxide delay addition is complete, the free monomer content is measured and when less than 0.7% the reaction medium is cooled to 30°C and adjusted to pH 4.5-5.5 with 14% ammonium hydroxide solution. The reaction mixture is then transferred to a degasser (200 rpm) to vent off any excess ethylene pressure. Colloid 585 defoamer (0.5g) is then added to the degassing vessel followed by t-butyl hydroperoxide (2.5g) dissolved in deionized water (25g) which was added at a rate of 1 ml/mm. The contents are then agitated in the degasser at 100 rpm, held for at least 2 hr. and then filtered. Following the above general procedure, an emulsion product having the following properties was obtained:

| Product Properties | |
|---|---|
| Colloidal Properties | |
| Solids (%) | 61.3 |
| Viscosity, (cps) 12 rpm | 5,050 |
| 60 rpm | 2,500 |
| pH | 5.4 |
| Accelerated Sedimentation(%) | 1.0 |
| Copolymer Properties | |
| Tg (°C) | -2.5 |
| Adhesive Performance Values | |
| PVC/cloth peel (lb) | 3.4 |
| Creep Resistance (mm/min) | 0.03 |
| Speed of set (sec) | 6-9 |
| cloth/cloth (lb) | |
| Dry | 14.4 |
| Wet | 1.0 |
| Thickening Ratio | 2.2 |
| Aluminum/cloth peel (lb) | 1.5 |

## EXAMPLE 2

Two VAE/AA copolymer emulsions were prepared essentially following the procedure of Example 1, except that one emulsion copolymer contained 2% acrylic acid and the other 4% acrylic acid. Both emulsions were adjusted to 61% solids and a processing pH of 4.5 and were then evaluated for shelf stability.

TABLE 1

|  | pH | VAE/2.0% AA 60 rpm Viscosity | pH | VAE/4.0% AA 60 rpm Viscosity |
|---|---|---|---|---|
| 1 mo. | 5.0 | 1,232, cps | 5.3 | 1,530 cps |
| 3 mo. | 4.7 | 1,040 | 5.1 | 1,400 |
| 5 mo. | 4.6 | 1,080 | 5.0 | 1,500 |
| 12 mo. | 4.2 | 1,060 | 4.6 | 1,604 |

It can be seen from the date in Table 1 that both VAE/AA copolymer emulsions exhibited very good shelf stability over a 12 month period.

EXAMPLE 3

In this example, a VAE/AA copolymer emulsion according to the invention (62% solids, inversion process) is compared to a conventional VAE/AA copolymer emulsion (55% solids, conventional process).

TABLE 2

|  | Inversion Process | Conventional Process |
|---|---|---|
| Setting Speed (sec) | 12 - 15 | 33 - 36 |
| Wet Tack | High | Low |
| Thickening Response |  |  |
| 10 pts DBP | 3.0 | 1.4 |
| Rheology | Good | Poor |
| Creep Resistance (mm/min) | 0.03 | 0.16 |
| DBP - Dibutylphthalate |  |  |

Table 2 shows a marked improvement in all the performance parameters for the VAE/AA copolymer emulsion according to the invention.

EXAMPLE 4

A vinyl acetate/ethylene/hydroxyethyl acrylate copolymer emulsion is prepared essentially following the procedure of Example 1 except that the 1% $H_2O_2$ delay feed (1) is 198.1 ml, delay feed (4) contains 78g of hydroxyethyl acrylate instead of the acrylic acid and the initial reactor charge is pressurized with ethylene to 550 psi at 30°C.

The reaction is initiated using the 1.0% aqueous hydrogen peroxide solution at a rate of 0.6 ml/min and the 10% zinc formaldehyde sulfoxylate solution at 0.5 ml/mm. After the reaction medium temperature increases 1°C (initiation), the vinyl acetate/hydroxyethyl acrylate monomer delay is started at 3.3 ml/min. Once the initial temperature rise starts to level off, the reaction temperature is ramped to 55°C in one hour by slowly increasing the rate of addition of the 1.0% hydrogen peroxide solution to achieve 16°C ΔT or approximately 0.8 ml/min addition rate at the initiation plus one hour mark. When the temperature reaches 55°C, the ethylene make-up pressure is then set to 600 psi, and the 1.0% hydrogen peroxide solution is automatically controlled to provide a setpoint 16 ΔT (°T reaction- °T jacket). After 3 hours the agitation is increased to 1000 rpm, the vinyl acetate/hydroxyethyl acrylate monomers delay is stopped (~562.2g added).

Following the above general procedure, an emulsion product having the following properties was obtained:

| Product Properties | |
| --- | --- |
| Colloidal Properties | |
| Solids (%) | 63.2% |
| Viscosity, (cps) 12 rpm | 1,230 |
| 60 rpm | 677 |
| pH | 4.3 |
| Accelerated Sedimentation(%) | 0.7 |
| Copolymer Properties | |
| Tg ($^\circ$C) | -8.5 |
| Adhesive Performance Values | |
| PVC/cloth peel (lb) | 3.3 |
| Creep Resistance (mm/min) | 0.1 |
| Speed of set (sec) | 9-12 |
| cloth/cloth (lb) | |
| Dry | - |
| Wet | 1.8 |
| Thickening Ratio | - |
| Foil/Kraft % Fiber Tear | 100 |
| Mylar/Cloth Peel (lb) | 0.4 |

## EXAMPLE 5

The following is a general procedure for preparing a vinyl acetate/ethylene/N-acrylamiodoglycolic acid (AGA) copolymer emulsion of the invention.

The components of the initial reactor charge and the various delay feeds are as follows:

| Initial Reactor Charge | |
| --- | --- |
| 1) Vinol 203 PVOH, 10% aqueous solution | 351g |
| 2) Vinol 107 PVOH, 10% aqueous solution | 234g |
| 3) Water (deionized) | 300g |
| 4) N-acrylamidoglycolic Acid (AGA) | 39g |
| 5) Ammonium Hydroxide Solution 14% | ~25g |
| 6) Igepal CO-887 Surfactant | 55.7g |
| 7) Ferrous Ammonium Sulfate, 1% aqueous solution | 4.8ml |
| 8) Vinyl Acetate | 1,950g |
| 9) Ethylene - quantity to equilibrate reactor to 550 psi at 30$^\circ$C | |
| Delay Feeds | |
| 1) Hydrogen Peroxide, 1.0% aqueous solution | ~122g |
| 2) Hydrogen Peroxide, 7.0% aqueous solution | ~56g |
| 3) Zinc Formaldehyde Sulfoxylate, 10% aqueous solution | ~104g |

The pH of combined polyvinyl alcohol solutions and the deionized water containing AGA is adjusted to 4.0 with the ammonium hydroxide. Next the Igepal surfactant is fully dissolved in the pH adjusted aqueous premix to which the ferrous ammonium sulfate solution is then added.

A one gallon reactor is filled with the water and blown dry with nitrogen. The premix solution is then added. With the premix being agitated at 200 rpm the vinyl acetate monomer is added. The reactor is purged (subsurface) twice with nitrogen (30 psi) and then once with ethylene (30 psi) at 30° C. The agitator speed is increased to 900 rpm and the reactor is pressurized to 500 psi with ethylene (subsurface). The reactor temperature and the ethylene pressure are allowed to equilibrate at 30° C and 500 psi, respectively.

The reaction is initiated using the 1.0% aqueous hydrogen peroxide solution at a rate of 0.4 ml/min and the 10% zinc formaldehyde sulfoxylate solution at 0.5 ml/min. Once the initial temperature rise (initiation) starts to level off, the reaction temperature is ramped to 60° C in one hour by slowly increasing the rate of addition of the 1.0% hydrogen peroxide solution to achieve 14° C ΔT at the initiation plus one hour mark. When the temperature reaches 60° C, the 1.0% hydrogen peroxide solution is automatically controlled to provide a setpoint 14° C ΔT (° T reaction- ° T jacket). After 3 hours the agitation is increased to 1000 rpm.

When the vinyl acetate free monomer level is less than about 3%, the 1.0% hydrogen peroxide delay is stopped and the 7% hydrogen peroxide delay is begun increasing from 0.3 to 1 ml/min over a period of 5-10 minutes. The 7% hydrogen peroxide delay addition is completed when the free monomer is less than 0.7%. The reaction medium is cooled to 30° C and adjusted to pH 4.5-5.5 with 14% ammonium hydroxide solution. The reaction mixture is then transferred to a degasser (200 rpm) to vent off any excess ethylene pressure. Colloid 585 defoamer (0.5g) is then added to the degassing vessel followed by t-butyl hydroperoxide (2.5g) dissolved in deionized water (25g) which was added at a rate of 1 ml/min. The contents are then agitated in the degasser at 100 rpm, held for at least 2 hours and then filtered. Following the above general procedure, an emulsion product having the following properties was obtained:

| Product Properties | |
|---|---|
| Colloidal Properties | |
| Solids (%) | 65.0% |
| Viscosity, (cps) 12 rpm | 2,100 |
| 60 rpm | 1,400 |
| pH | 5.2 |
| Accelerated Sedimentation(%) | 0.5 |
| Copolymer Properties | |
| Tg (° C) | 6.5 |
| Adhesive Performance Values | |
| PVC/Cloth Peel (lb) | 3.8 |
| Creep Resistance (mm/min) | 0.01 |
| Speed of set (sec) | 9-12 |
| cloth/cloth (lb) | |
| Dry | 10.7 |
| Wet | 1.7 |
| Thickening Ratio | 2.2 |

The emulsion product containing 0.25% thickening agent and 1% defoamer and adjusted to pH 3.5 with phosphoric acid was padded onto Whatman #4 paper at about 10% solids and cured. The nonwoven product showed CMD tensile properties of 12 pli dry, 1.8 pli wet and 3.6 pli methyl ethyl ketone.

## STATEMENT OF INDUSTRIAL APPLICATION

The invention provides vinyl acetate/ethylene/acrylic acid copolymer emulsions of high solids content and relatively low viscosities for use as adhesive compositions and vinyl acetate/ethylene/latent crosslinking monomer copolymer emulsions for use as nonwoven binders.

**Claims**

1. In a method for preparing an aqueous copolymer emulsion in which vinyl acetate, ethylene and a water soluble comonomer are polymerized in the presence of a stabilizing system, the improvement for preparing a high solids, low viscosity, stable emulsion which comprises polymerizing an initial charge of vinyl acetate and ethylene monomers in water containing a stabilizing system consisting essentially of 2-4 wt%, based on vinyl acetate, of low molecular polyvinyl alcohol which has a 100 to 600 degree of polymerization and 1-4 wt%, based on vinyl acetate, of a nonionic surfactant which is an alkyl phenoxy poly(ethyleneoxy)ethanol containing 30-40 ethylene oxide units, the alkyl group containing 7-18 carbon atoms, the monomers to water ratio such that a water-in-monomer emulsion is formed.

2. The method of Claim 1 in which at least 50% of the total vinyl acetate to be polymerized is initially charged.

3. The method of Claim 1 in which at least 75% of the total vinyl acetate to be polymerized is initially charged.

4. The method of Claim 1 in which the water soluble comonomer is added all at once to the reaction medium containing the initial vinyl acetate charge.

5. The method of Claim 1 in which the water soluble comonomer is delayed into the reaction medium.

6. The method of Claim 1 in which the water soluble comonomer is acrylic acid.

7. The method of Claim 1 in which the water soluble comonomer is N-methylolacrylamide.

8. The method of Claim 1 in which the water soluble comonomer is acrylamidoglycolic acid.

9. The method of Claim 1 in which the polyvinyl alcohol is a mixture of two polyvinyl alcohols having a 100-600 degree of polymerization, one of which has a degree of polymerization in the range of 185-255.

10. The method of Claim 1 in which the alkyl group of the nonionic surfactant is octyl or nonyl.

11. The method of Claim 1 in which the nonionic surfactant is a nonylphenoxy poly(ethyleneoxy) ethanol.

12. In a method for preparing a vinyl acetate/ethylene/acrylic acid copolymer emulsion by the aqueous emulsion polymerization of vinyl acetate, ethylene and acrylic acid monomers in the presence of a stabilizing system, the improvement which comprises a stable vinyl acetate/ethylene/acrylic acid copolymer emulsion, the copolymer containing 60-93 wt% vinyl acetate, 5-34 wt% ethylene, and 2-6 wt% acrylic acid, the emulsion being about 60-70% solids, having a viscosity of less than about 3000 cps at 60% solids and prepared by aqueous emulsion copolymerization of the monomers in the presence of a stabilizing system consisting essentially of 2-4 wt%, based on a vinyl acetate monomer, of low molecular weight polyvinyl alcohol which has a 100-600 degree of polymerization and 1-4 wt%, based on vinyl acetate monomer, of a nonionic surfactant which is an alkyl phenoxy poly(ethyleneoxy)ethanol containing 30-40 ethylene oxide units, the alkyl group containing 7-18 carbon atoms, at least a sufficient amount of vinyl acetate and ethylene being initially charged to the reaction medium to provide a water-in-monomer emulsion.

13. The method of Claim 12 in which at least 50% of the total vinyl acetate to be polymerized is initially charged.

14. The method of Claim 12 in which at least 75% of the total vinyl acetate to be polymerized is initially charge.

15. The method of Claim 14 in which the acrylic acid is delayed into the reaction medium.

16. The method of Claim 15 in which the polyvinyl alcohol is mixture of two polyvinyl alcohols having a 100-600 degree of polymerization, one of which has a degree of polymerization in the range of 185-255.

17. The method of Claim 16 in which the alkyl group of the nonionic surfactant is octyl or nonyl.

18. The method of Claim 16 in which the nonionic surfactant is a nonylphenoxy poly(ethyleneoxy) ethanol.

19. In a method for preparing a vinyl acetate/ethylene/water soluble comonomer copolymer emulsion by the aqueous emulsion polymerization of vinyl acetate, ethylene and water soluble comonomers in the presence of a stabilizing system, the improvement which comprises a stable vinyl acetate/ethylene/water soluble comonomer copolymer emulsion, the copolymer containing 60-93 wt% vinyl acetate, 5-34 wt% ethylene, and 2-10 wt% water soluble comonomer, the emulsion being about 60-70% solids, having a viscosity of less than about 3000 cps at 60% solids and prepared by aqueous emulsion copolymerization of the comonomers in the presence of a stabilizing system consisting essentially of 2-4 wt%, based on a vinyl acetate monomer, of low molecular weight polyvinyl alcohol which has a 100-600 degree of polymerization and 1-4 wt%, based on vinyl acetate monomer, of a nonionic surfactant which is an octyl or nonyl phenoxy poly(ethyleneoxy)ethanol containing 30-40 ethylene oxide units, at least a sufficient amount of vinyl acetate and ethylene being initially charged to the reaction medium to provide a water-in-monomer emulsion, the initial vinyl acetate charge being at least 75% of the total vinyl acetate to be polymerized.

20. The method of Claim 19 in which the water soluble comonomer is N-methylol acrylamide.
21. The method of Claim 19 in which the water soluble comonomer is acrylamidoglycolic acid.